# EUROPEAN PATENT APPLICATION

(11) **EP 0 562 818 A2**
(43) Date of publication of application: **29.09.1993**
(21) Application number: 93302192.5
(22) Date of filing: 23.03.1993
(51) Int. Cl.: G06F 15/38

(54) **System for pattern based text translation**

(30) Priority: 23.03.1992 JP 64552/92
(71) Applicant: International Business Machines Corporation, Armonk, N.Y. 10504 (US)
(72) Inventor: Maruyama, Hiroshi, Ohta-ku, Tokyo (JP); Takeda, Koichi, Machida-shi, Tokyo (JP)
(74) Representative: Burt, Roger James, Dr.

(57) **Abstract**

A system for pattern based text translation using translation patterns for machine translation that can easily be created and efficiently retrieved by a user is provided. A translation pattern comprises a source language pattern (18A), a variable (18B) that replaces this source language pattern with one character, and a target language pattern (18C) as a translation sentence corresponding to said source language pattern. In addition, the source language pattern includes a nest in which another source language pattern can be nested as a variable. A translation sentence is generated based on the result of matching between an input text sentence and the translation pattern. If there is no matching translation pattern, translation is performed by a general machine translation apparatus based on a grammar. Because a nested structure is employed, the user can create a number of translation patterns based on a specific method of expression, and can easily perform customisation. Furthermore, fast pattern matching becomes possible by creating an index with a tree structure.

## Description

This invention relates to a translation system based on patterns, and more particularly to a translation system suitable for use by users as preprocessing for a general machine translation system that is difficult to customize.

The accuracy of the translation system itself is clearly of importance in putting machine translation to practical use. However, customisation functions are no less important, since they make accommodation to the wording of an application easier.

In current machine translation technology, customisation is mainly performed by additions and changes to the terms of a dictionary and tuning of grammatical rules.

Both a high level knowledge of linguistics and of the system is required to modify the dictionary and the grammatical rules while maintaining the integrity of the entire system. In addition, if expressions unique to the customer do not fit the language model of the system, it is sometimes very difficult to add such expressions. Therefore, the ease of customisation is a key factor in putting machine translation into practical use.

One method to solve such problems in which the user prepares in advance translation sentence patterns unique to him or her, and in which translation sentences are generated by collating these patterns as preprocessing of translation is disclosed in, for example, Japanese Published Unexamined Patent Applications 2-32467 and 3-116272. These translation sentence patterns are arranged to be replaced with "numerical values" and specific terms in an original sentence as variables.

However, this method is in principle one in which the translation sentence patterns correlate an original sentence and a translation sentence in a one-to-one relationship. It is necessary to prepare a number of patterns so as to cover a wide range of expressions, and to take an extensive period of time for creating and retrieving the translation sentence patterns, resulting in the reduced efficacy of the translation system.

According to this invention, it is possible to retrieve translation patterns prepared by the user, and to generate a translation sentence based on these patterns. The translation pattern has a very simple and flexible form so that even users without knowledge of linguistics and the system can add a new translation pattern without compromising the consistency of the translation system itself. In addition, the pattern matching algorithm can efficiently handle a large amount of patterns so that the response of the entire system is not adversely affected.

According to the present invention there is provided a data processing system including means for receiving and storing a first data stream representing a source language and an output means for displaying a second data stream corresponding to a target language, said system comprising: means for partitioning said first data stream into single units each representing a single word of said source language; means for storing a predetermined data structure used for processing said first data stream by associating each node of said data structure with a single word of said source language; means responsive to each single unit for traversing said first data structure according to a predetermined set of functions to determine exhaustive sets of nodes corresponding to possible translation patterns for said first data stream; means for determining from said sets of possible translation patterns a minimal translation pattern having the least number of nodes; means responsive to said minimal translation pattern for extracting from said data structure a second data stream corresponding to the target language;
and means for displaying said second data stream thereby translating the source language into the target language.

According to another aspect of the invention there is provided a system further comprising means responsive to each single unit for traversing said first data structure to determine exhaustive sets of nodes corresponding to possible translation patterns for said first data stream according to the following: record the node of a matching single unit and a source language word, if said matching source language word is a terminating word replace the translation pattern extracted thus far with a single variable and repeat the matching process using said variable thereby nesting the extracted translation patterns.

According to a further aspect of the present invention there is provided a system wherein said data structure has a hierarchical form comprising a single unit address location field, a word corresponding to said single unit field, an attribute field, a continuity field, a number of branches field and associated branch address fields.

According to yet another aspect of the present invention there is provided a system wherein a translation pattern comprises a source language pattern, a variable and a target language pattern.

According to yet a further aspect of the present invention there is provided a system further comprising means for adding a translation pattern to said data structure.

An embodiment of the invention may provide unique translation patterns comprising a source language pattern, a variable that replaces the source language pattern with a character, and a target language pattern which is a translation sentence corresponding to the source language pattern. The source language pattern further contains a nested structure in which another source language pattern can be included as a variable.

This enables the user to easily create a translation pattern. Since a nested structure is employed, it is possible to suppress increases in the length of translation patterns. For source language patterns, faster pattern matching is possible by creating an index of tree structures.

An embodiment of the present invention will now be described, by way of example only, with reference to the following figures in which:

Figure 1 shows the configuration of an entire machine translation system according to the invention.

Figure 2 shows an example of translation patterns according to the invention.

Figure 3 shows an indexed tree structure for source language patterns for the translation patterns of Figure 2.

Figure 4 shows an example of translation patterns according to the invention.

Figure 5 shows an algorithm for translation processing according to the invention.

Figure 6 shows a subset of translation patterns relating to a text sentence.

Figure 7 shows a tree structure corresponding to the translation patterns of Figure 6.

Figure 8 shows an algorithm for matching a text sentence and translation patterns.

Figure 9 shows details of the scan(i) algorithm of Figure 8.

Figure 10 shows details of the complete(i) algorithm of Figure 8.

Figure 11 illustrates the results of the algorithms in Figures 8, 9 and 10 for the translation patterns of Figure 6.

Figure 12 shows an example of alternative patterns according to the invention that matches part numbers.

Figure 13 shows a further example of a translation table according to the invention that is used for creating a computer command form natural-language-like inputs.

Figure 14 shows a yet further example of a translation table.

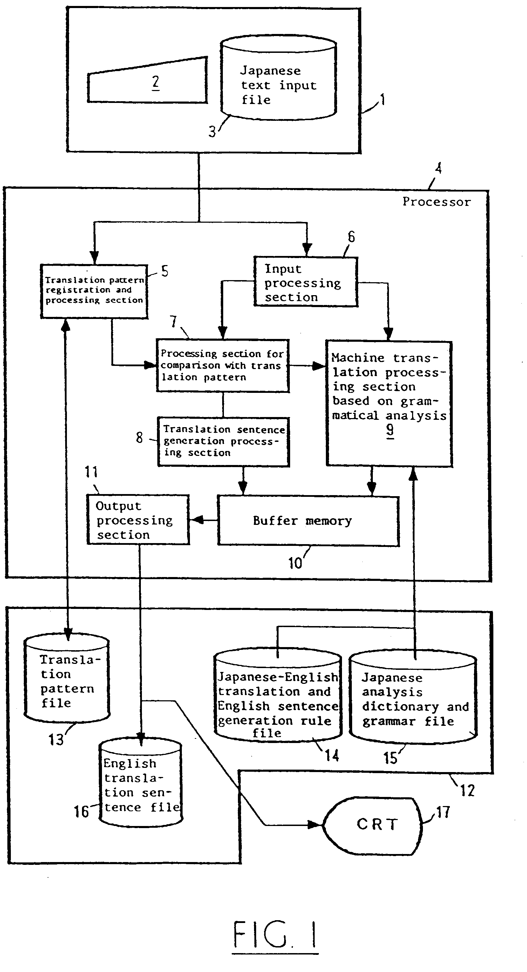

Figure 1 is a diagram showing a configuration of an entire machine translation system as an embodiment of this invention. An example of Japanese-English translation is described herein.

Text data and various operation commands are input to a processor 4 by a keyboard 2 or a Japanese text input file 3. The processor 4 has a general configuration such as an arithmetic unit, a memory and a controller to perform translation processing according to the processing procedure described later. Functionally, it has the following configuration: a translation pattern registration section 5 which is used by a user to generate and register a translation pattern table; an input processing section 6 which sends the Japanese input text to a comparison processing section 7 which compares it with translation patterns in a translation pattern file 13 in order to ascertain a match. If a match is identified, a translation generation processing section 8 generates a translated English sentence using the translation pattern, and sends it to an output processing section 11 via a buffer memory 10. If a match is not identified, a machine translation processing section 9 performs machine translation by grammatical analysis. If required, the system may be configured to translate the Japanese text using both the translation patterns and the machine translation processing, allowing the comparison of results and the selection of the preferred translation.

External storage 12 provides the translation pattern file 13 which records the above-mentioned translation pattern table, a Japanese-English translation and English sentence generation rule file 14 for the machine translation processing, as well as a Japanese analysis dictionary and grammar file 15. A storage file device 16 records the English sentence translated by the translation sentence processing section 8 or the machine translation processing section 9. The progress and the result of the translation processing are displayed on a display means 17.

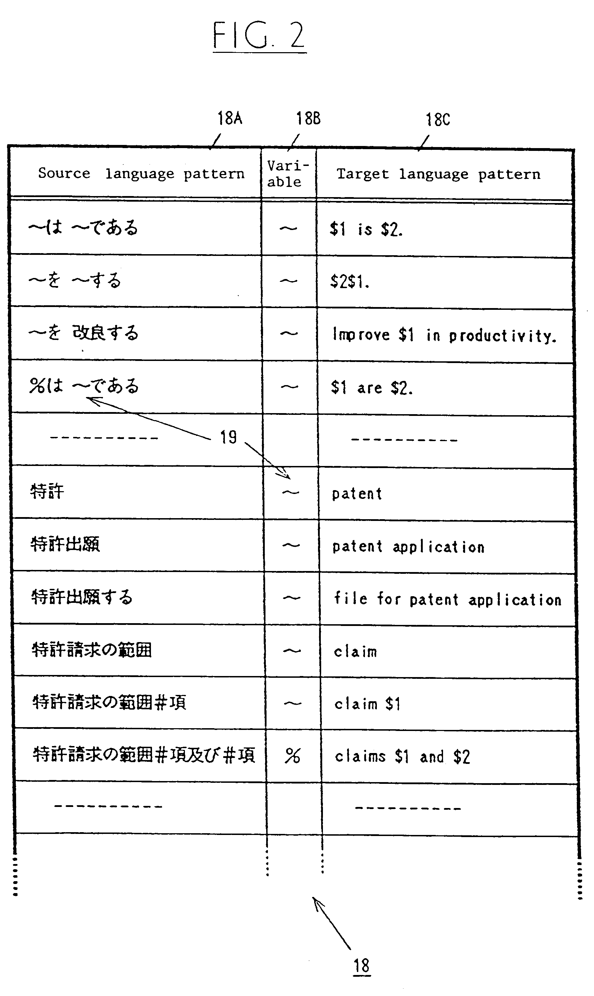

Figure 2 shows an example of a translation pattern table.

A translation pattern 18 consists of a tuple of three items source language pattern 18A, variable 18B, target language pattern 18C. A set of such tuples constitutes a translation pattern group. For example, a translation pattern < 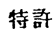 ,∼, patent> indicates that the character string, " 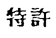 " , is translated into the character string, "patent." In addition, it indicates that, the string " 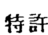 " can be identified with the one-character variable "∼ ," when "it" appears as part of a longer character string. The variable can be treated as one character regardless of its physical size as long as it can be distinguished from other characters. A source language pattern 18A may contain several variables 18B such as "∼" or "#." The first and second occurrences of the variable "∼" in a source language 18A are replaced with variables $1 and $2 respectively in the target language pattern 18C.

The source language pattern 18A may be expressed in the form of a sentence, a clause, a phrase, or a lexical category. As described later, the source language pattern 18A is characterised by the fact that it contains a sentence, a clause, or a phrase with a nested structure 19 for the variable 18B, as in " 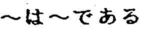 ".

Such a nested structure 19 using the variable 18B is very simple and flexible, and can easily be used by a user who does not have knowledge of linguistics and the system. The user can easily register and add a new translation pattern to the translation pattern file 13 without compromising the consistency and accuracy of the translation system.

When compared with Japanese, one of the major features of expression in English is that a noun or verb can be affected by a number This can be dealt with by using a machine translation system together with an accurate grammar. However, for specific expressions that the user frequently uses, it may be acceptable to prepare translation patterns previously distinguished by a number. For example, as seen in the examples of Figure 2, nouns or verbs in the target language pattern may be altered as follows by selectively using variables "∼" and "%" according to the number, eg:

Claim 1 is invalid.

Claims 2 and 3 are valid.

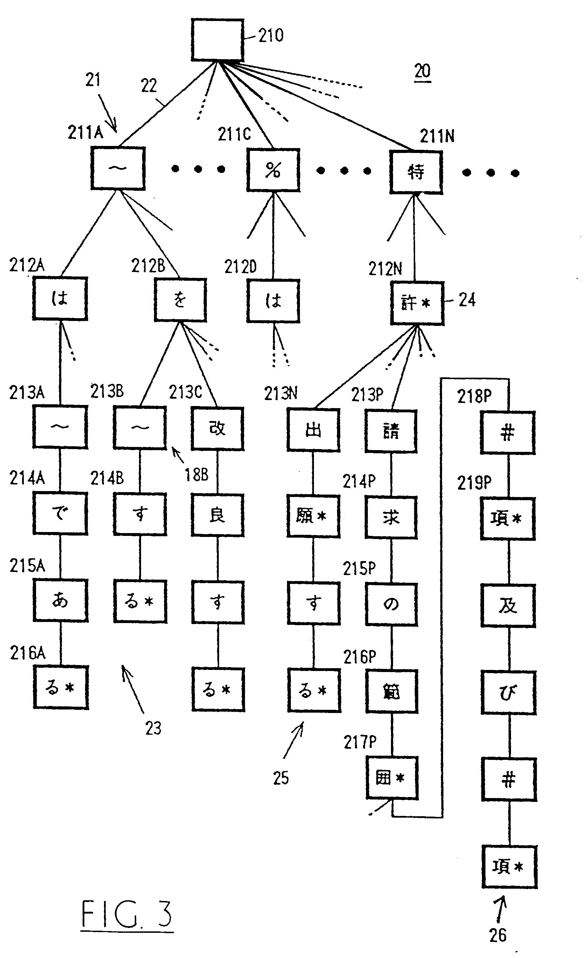

As it is conceivable that the number of translation patterns may become huge, it is necessary to provide an efficient source language pattern accession means. Therefore, an index with a tree structure 20, as exemplified by Figure 3, is created for the source language patterns and is registered in the translation pattern file 13 as a part of the table of source language patterns.

As shown in Figure 3, the index is created in a form that extracts common prefixes in the source language patterns 18A such as "∼" and " 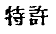 ". Each of the nodes 21 (211A, 212A, ...) of the tree structure 20 corresponds to one character or variable. Therefore, traversing the tree from the root 210 through nodes 211A, 212A, can be considered to correspond to a partial pattern being matched in the source language pattern. For example, the node 212N corresponds to a matching with a partial pattern " 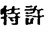 ". The asterisk (*) of node 212N indicates that this node corresponds to the end of a full pattern, that is a source language pattern " 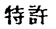 ". That is, the node corresponds to a terminating word or character.

As described, the source language patterns 18A have the feature that they contain a sentence pattern such as " 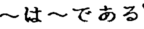 " 23 in which the variables are embedded. In addition, there are partial patterns such as 24, which consist of a noun or a noun phrase such as " 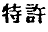 ", and which constitute a part of a sentence. The partial patterns include patterns consisting of various lexical categories or phrasal categories such as a pattern 25 constituting a verb phrase " 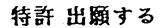 ". Similarly, it is possible to create patterns consisting of clauses. The partial patterns also include a pattern 26 with a nested structure containing a variable or symbol such as "#". The above-mentioned sentence pattern 23 may be further taken in as a part of another sentence pattern or partial pattern with a relative pronoun. In this manner, there are various source language patterns, and there is no limitation on either the arrangement of characters and variables constituting each pattern or the length of each pattern. It is possible to create translation patterns most suitable for the user by freely combining each pattern using various characters or variables as required.

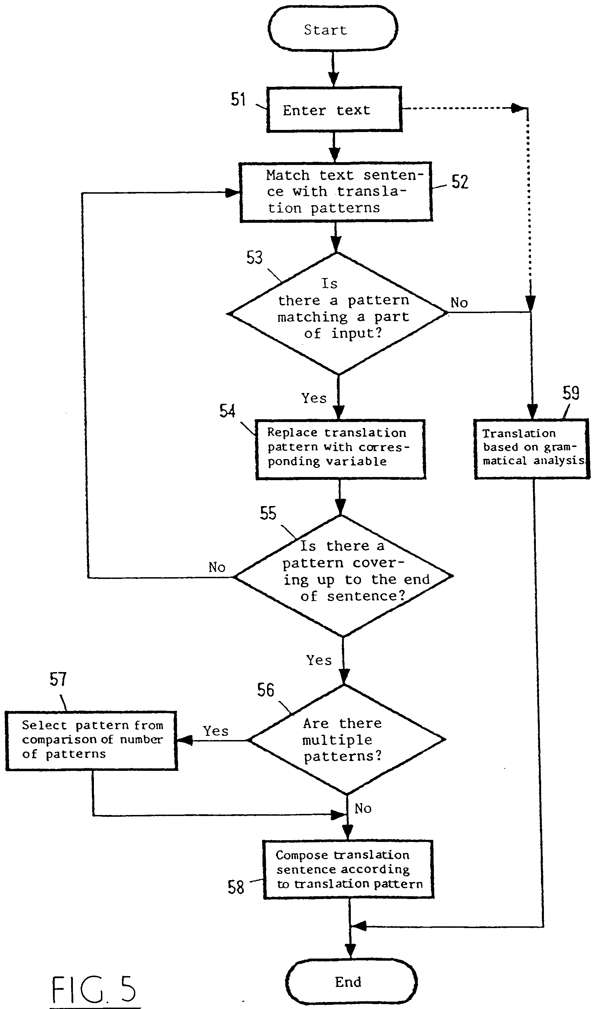

Figure 4 is a diagram which shows essential parts of an example of a translation pattern and comprises a source language pattern table 410 and a target language pattern table 420. The source language pattern is recorded with an index as an address 430, attribute 440, continuity 450, number of branches 460, branch addresses 470 and the like for each character and variable in the source language pattern. The attribute includes distinction as to whether the symbol in the source language is a normal character or a variable. However, such a distinction is not necessarily-required. Continuity indicates whether or not there is a separation in a source language pattern. If a source language pattern such as " 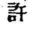 " terminates at a node, the variable 18B to be replaced, such as "∼", and a pointer (222L) to a translation sentence 18C such as "Patent" in the corresponding target language pattern table are extracted. There may be a plurality of translation sentences and variables which could replace a single source language pattern. A pointer to an index corresponding to each succeeding character or variable is described in a branch address column. The branch address may be encoded and calculated using any search method such as a hash table or a binary search method.

Figure 5 is a diagram showing one example of an algorithm for the translation processing according to this invention.

First, a text in Japanese is entered at 51. The text is matched with the source language patterns in the translation patterns at 52. If there is a source language pattern matching for part of the input, that source language pattern is converted to the corresponding variable in the translation pattern at 53 and 54. This processing is repeated until translation patterns covering the whole of the text sentence are extracted 55. Then it is determined whether or not there is a preferred translation pattern, covering the input text patterns, having the same length as the input text sentence. If there are multiple extracted translation patterns, the pattern that has the minimum number of patterns or nestings is selected. Alternately, the user may specify priorities for each pattern in advance for selection.

Finally, an English sentence is constructed by converting the extracted source language pattern into a target language pattern according to the translation pattern at 58. If there is no source language pattern matching a part of the entered text sentence 53, the processing is performed by machine translation based on ordinary grammatical analysis at 59.

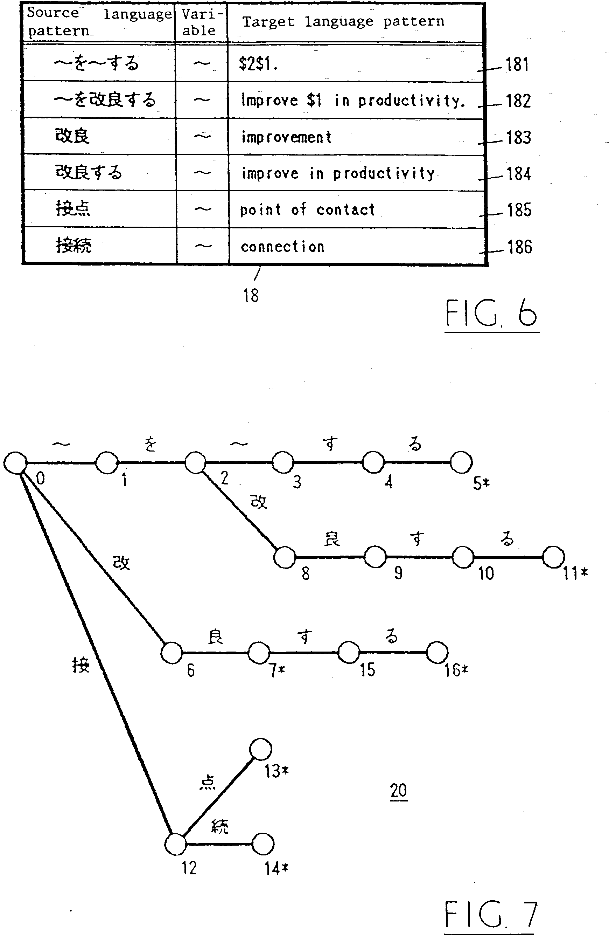

The matching of the text sentence with the translation pattern in 52 is performed by examining the entered text sentence character by character from left to right. It will be appreciated by a person skilled in the art that notwithstanding the embodiment of the invention described herein being tailored towards ideographic languages, a more general embodiment can equally well be realised using languages which are not ideographic in nature. The algorithm utilised for the translation will be explained with reference to Figures 6 to 8 inclusive in conjunction with the text sentence " 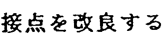 ".

First, Figure 6 shows the subset of translation patterns which relate to the text sentence. Figure 7 shows the pertinent parts of the index tree of translation patterns as a tree structure 20. The tree comprises branches and nodes, the nodes are labelled zero to sixteen and the branches represent characters or variables.

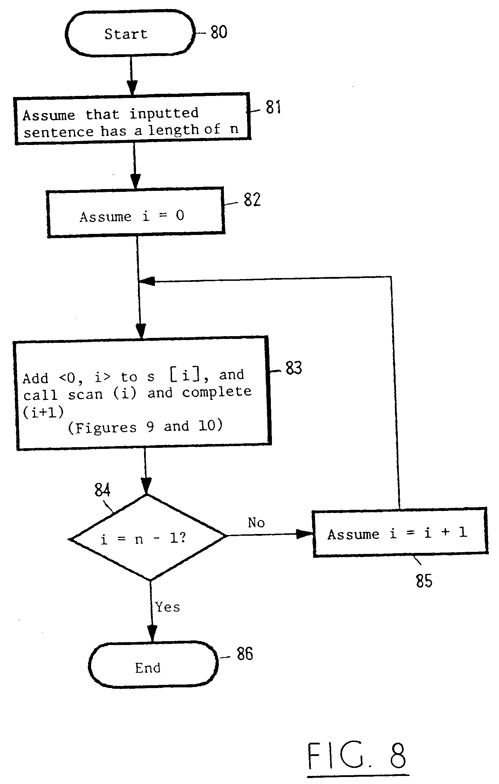

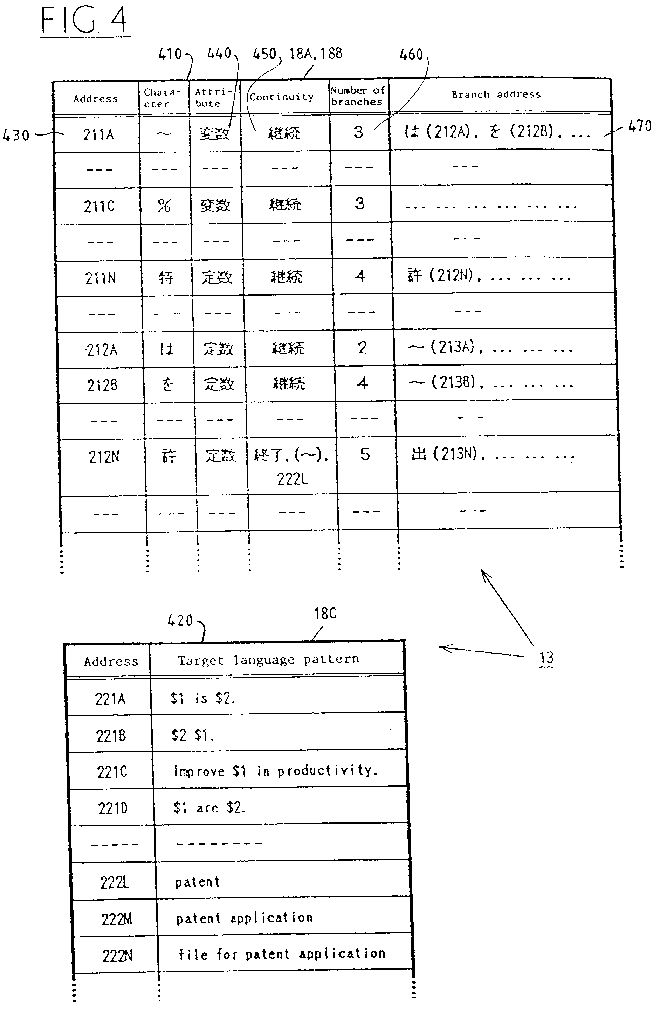

Referring to Figure 8, first, the length of the sentence, n, is determined at 81. In the example shown, n is 7. A state set, s[i], corresponds to each character position i. In the initial state prior to analysis of the sentence, s[0] = (<0,0>) because matching has not commenced. The analysis is performed by executing the two operations of scan(i) and complete(i) for each character position i = 0, 1, ..., n at 83 to 85.

An element of the state set is a pair <p, f> which represents a state where a pattern is matched. The "p" represents a node of the index tree, while "f" indicates where the matching of that pattern starts in the sentence.

For an input character x, a node p' traced from a node p through the index tree is defined as p' = shift(p, x). For example, shift(7, 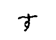 ) = 15 in Figure 7. The operation of tracing the index tree, shift(p, x) can be executed at a high speed by indexing or hashing branches from each node of the index tree using an array containing the entire alphabet set of the source language.

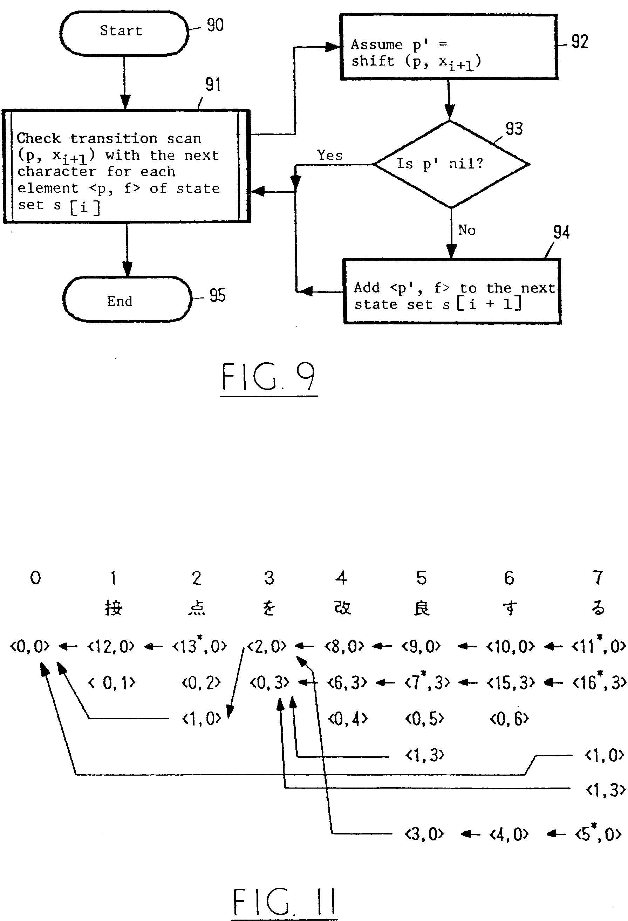

Figure 9 shows the details of processing of scan(i). That is, scan(i) uses shift(p, xᵢ₊₁) for each state, <p, f>, of s(i) to determine whether or not the (i+1) th character, xᵢ₊₁, of the input sentence matches a pattern at 91 and 92. If so, <shift(p, xᵢ₊₁), f> is added to the state set s[i+1] for character position i+1 at 93 and 94.

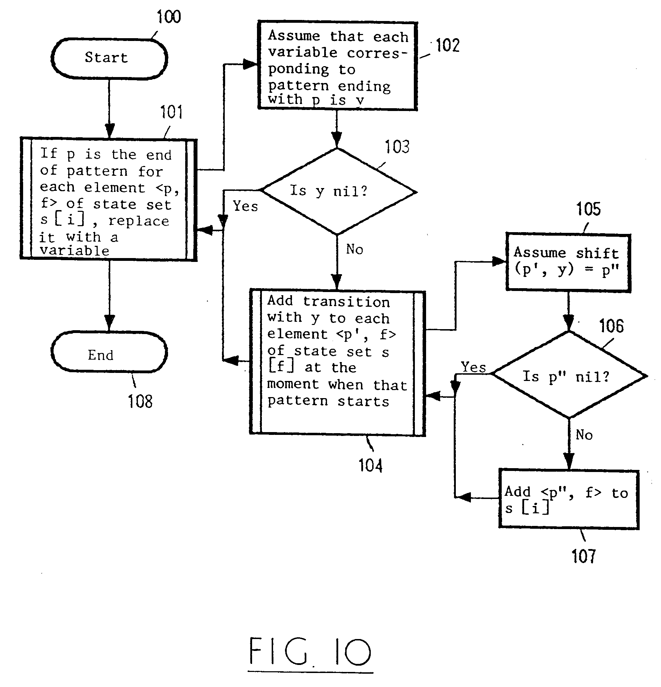

Figure 10 shows the details of processing complete(i). For each state <p, f> of s[i], if p corresponds to the end of a pattern, complete(i) sets the replacement variable of that pattern to y at 101, 102, and returns to the start position, f, of that pattern to examine pattern matching with y. That is, shift(p', y) is examined for each element, <p', f'>, of s[f], and, if the matching is successful, <shift(p', y), f'> is added to s[i] at 104, 105.

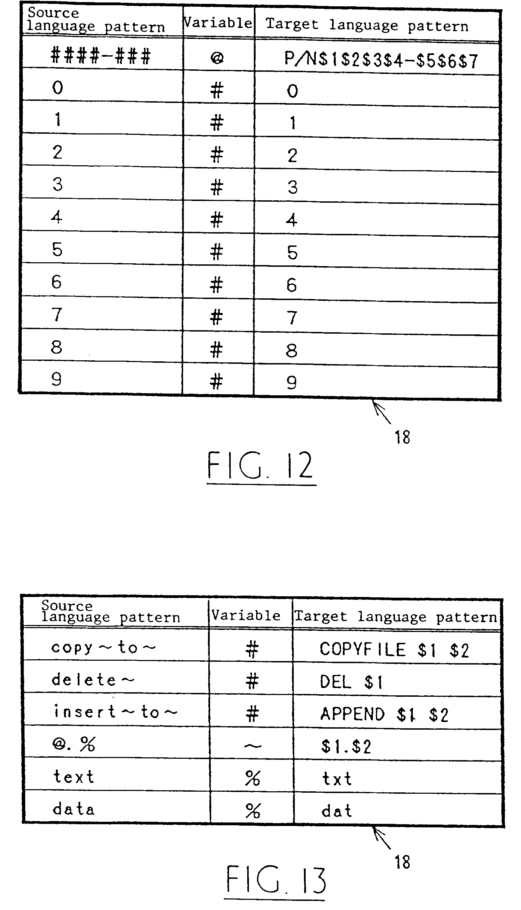

Figure 11 shows the execution results of the algorithm for the text sentence " 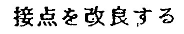 ". The figure shows the contents of s[i] for each character position i. At the character position i = 1, as the result of scan(i) processing, a partial pattern <12, 0> starting at node 0 and ending at node 12, that is, " 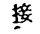 " is extracted. At the character position i = 2, a partial pattern <13, 0> starting at node 0 and ending at node 13, that is, " 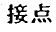 " is extracted. Because node 13 has a (*) corresponding to the end of a pattern, a partial pattern <1, 0>, in which " 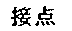 " is replaced with "∼", is added to s[2]. At the next character pattern i = 3, a partial pattern <2, 0> starting at node 0 and ending at node 2, that is, " 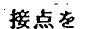 ", is therefore extracted. Then, the pattern matching is repeated to the final character position in a similar manner.

Whether or not the matching is successful depends only on whether or not there is a pattern starting at the beginning of a sentence and ending at the final character position n (n = 7 in this case). In this example, <11*, 0> and <5*, 0>. How each state was generated by the shift () operation can be traced using the back arrows. For example, it can be seen that the pattern <11*, 0> follows a path of nodes 0-12-13-0-1-2-8-9-10-11, while the pattern <5*, 0> follows a path of nodes 0-12-13-0-1-2-3-4-5. This information can be utilised, after completion of the analysis, to check which pattern matches with which part of a sentence. In the case of this example, it was found that there were two possible matches results, that is, 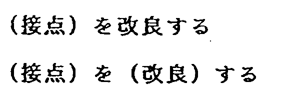
Here, the characters enclosed in the parentheses indicate that they match nested partial patterns.

Generally, there may be multiple patterns providing a match. Although various approaches may be devised as to which translation pattern should be selected, the easiest approach is to assign priority to the pattern with the least number of elements, thereby indicating a better correlation between the original sentence and the translation pattern. In the above example, as clearly seen in Figure 6, " 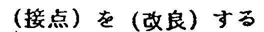 " uses the three patterns of (181, 183, 185), while " 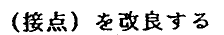 " uses the two patterns of (182, 185). Therefore, the latter is preferred.

It is easy to generate a corresponding translation sentence from the matching result. It is sufficient to replace each part of each source language pattern in Figure 6 with the target language pattern according to the translation patterns (182, 185). Thus, a translation sentence "Improve point of contact in productivity" can be obtained.

The pattern collation algorithm of this invention works effectively even for a large amount of patterns, and does not adversely affect the response time of the entire system.

As also shown by the tree structure of Figure 3, the variable of the source language pattern may be any one character. More accurate matching of patterns becomes possible by distinguishing the variables according to the contents of the patterns to be replaced by the variables (date, part number, etc.). For example, when a seven-digit number such as 5576-003 is used as a part number of a product, a pattern which matches with such a part number can be described as shown in Figure 12. Here, @ is a variable matching with a part number, and # is a variable matching with one numeral.

When this translation pattern is used, it is possible to arrange that a translation pattern such as
<Original language pattern, variable, target language pattern> @ 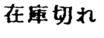 ,∼, No stock of $1
matches only a form with a part number such as "5576-003 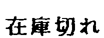 ", and generates a translation of "No stock of P/N5576-003." The variable can be treated as one character regardless of its physical size as long as it can be distinguished from other characters. It is possible to create various sentences with high utility by combining this part number pattern with the patterns with a nested structure including sentences or phrases shown in Figure 2.

The translation based on patterns, as disclosed by this invention, can be used as preprocessing for an existing translation system, and if pattern matching is successful, to employ the translation based on the pattern, but if the pattern matching is unsuccessful, to utilise the existing translation system. That is, the translation patterns of this invention are prepared for fields that are difficult to customize in a general translation system, and are used as preprocessing for machine translation. This enables a translation system to quickly deal with special expressions that are difficult to process.

It will be apparent to one skilled in the art that translation of text based on patterns, as disclosed by this invention, can be used in a translation system translating English or German into Japanese. Furthermore, it can be used for purposes other than translation between natural languages. As one example of such cases, Figure 13 shows an example of translation tables used for creating computer commands from natural language-like inputs. @ represents a name in the alphabet of up to eight digits corresponding to the leading part of a file name. As in the example of Figure 12, a file name can be described in such a way as "WEIGHT.TXT." Furthermore, it is possible to create a command such as "COPYFILE WEIGHT.TXT TO HEALTH.TXT" from natural language-like inputs by combining it with a pattern with a nested structure.

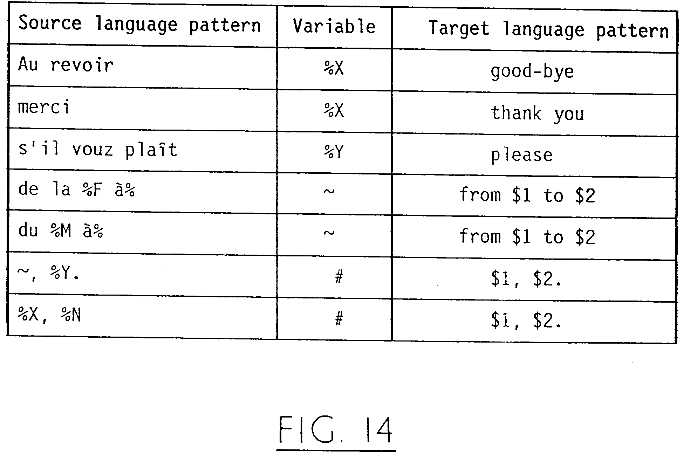

Figure 14 illustrates a further example of a translation table. The table of translation patterns can be used to translate some of French conversational expressions into English using the translation apparatus of this invention. Here, %F and %M are feminine and masculine nouns, respectively. %N stands for proper nouns for names.

## Claims

1. A data processing system including means for receiving and storing a first data stream representing a source language and an output means for displaying a second data stream corresponding to a target language, said system comprising:
means for partitioning said first data stream into single units each representing a single word of said source language;
means for storing a predetermined data structure used for processing said first data stream node by associating each node of said data structure with a single word of said source language;
means responsive to each single unit for traversing said first data structure according to a predetermined set of functions to determine exhaustive sets of nodes corresponding to possible translation patterns for said first data stream;
means for determining from said sets of possible translation patterns a minimal translation pattern having the least number of nodes;
means responsive to said minimal translation pattern for extracting from said data structure a second data stream corresponding to the target language; and
means for displaying said second data stream thereby translating the source language into the target language.

2. A system as claimed in claim 1 further comprising means responsive to each single unit for traversing said first data structure to determine exhaustive sets of nodes corresponding to possible translation patterns for said first data stream according to the following: record the node of a matching single unit and a source language word, if said matching source language word is a terminating word replace the translation pattern extracted thus far with a single variable and repeat the matching process using said variable thereby nesting the extracted translation patterns.

3. A system as claimed in any preceding claim wherein said data structure has a hierarchical form comprising a single unit address location field, a word corresponding to said single unit. field, an attribute field, a continuity field, a number of branches field and an associated branch address field.

4. A system as claimed in any preceding claim wherein a translation pattern comprises a source language pattern, a variable and a target language pattern.

5. A system as claimed in any preceding claim further comprising means for adding a translation pattern to said data structure.
